# EUROPÄISCHE PATENTSCHRIFT

(11) **EP 0 935 299 B1**
(45) Veröffentlichungstag und Bekanntmachung des Hinweises auf die Patenterteilung: **27.03.2002**
(21) Anmeldenummer: 98124519.4
(22) Anmeldetag: 22.12.1998
(51) Int. Cl.: H01M 2/18, H01M 10/16

(54) **Akkumulator mit Elektrodenplatten-Separatorsatz**
Accumulator with an electrode plate-separator assembly
Accumulateur avec un ensemble de plaques d' électrode-séparateur

(30) Priorität: 05.02.1998 DE 19804423
(43) Veröffentlichungstag der Anmeldung: 11.08.1999
(73) Patentinhaber: HAWKER GmbH, 58089 Hagen (DE)
(72) Erfinder: Kasner, Günter, 58093 Hagen (DE); Lüger, Bernd, 44536 Lünen (DE); Pichlo, Hans-Walter, 58135 Hagen (DE); Trimborn, Jens, 42119 Wuppertal (DE)
(74) Vertreter: Köchling, Conrad-Joachim

(56) Entgegenhaltungen:
- EP-A- 0 053 268
- EP-A- 0 167 400
- EP-A- 0 352 450
- DE-A- 1 926 698
- FR-A- 687 506
- FR-A- 757 315
- GB-A- 756 644
- GB-A- 781 629
- US-A- 2 084 964
- US-A- 2 934 585
- US-A- 5 470 676
- PATENT ABSTRACTS OF JAPAN vol. 097, no. 003, 31. März 1997 -& JP 08 287944 A (SHIN KOBE ELECTRIC MACH CO LTD), 1. November 1996

## Beschreibung

Die Erfindung betrifft einen Akkumulator, insbesondere Bleiakkumulator, mit einem in einem Akkumulatorgefäß angeordneten Plattensatz, dessen positive und negative Elektrodenplatten mit einem jeweils dazwischen angeordneten Separator eine Stapelanordnung bilden, wobei der Separator aus einem Separatorblatt besteht und an der zur zu schützenden Elektrode gerichteten Seite des Separators Ausformungen vorgesehen sind, die zwei parallele Randkanten der Elektrode mindestens teilweise abdecken, wobei der Separator seitlich über die Ausformungen verlängert.

Eine derartige Ausbildung ist aus der Veröffentlichung PATENT ABSTRACTS OF JAPAN vol. 097, no. 003, 31. März 1997 bzw. JP 08 287944 A bekannt. Bei der bekannten Ausbildung ist zwischen den rippenartigen Vorsprüngen der Separatorplatten ein Abstand gebildet, so dass ein labyrintartiger Spalt gebildet ist.

Die positiven und negativen Platten einer Akkumulatorenzelle, im Wechsel der Polaritäten aufeinander gelegt, bilden einen gemeinsamen Plattensatz. Zur Isolierung der Platten sind zwischen diese so genannte Scheider oder Separatoren eingefügt. Aufgrund ihrer offenen Porenstruktur stellen diese Separatoren die Ionenleitung zwischen den Platten sicher. Werden die positiven und die negativen Elektroden jeweils über Polbrücken mit dem positiven und dem negativen Zellenpol verbunden, so kann nach Ausfüllen der Zwischenräume mit Schwefelsäure der Stromkreis über einen Verbraucher zum Zwecke der Entladung angeschlossen werden.

Ein solcher Plattensatz birgt die Gefahr in sich, dass durch einseitig gegenüber den Elektrodenplatten verschobene Separatoren und durch so genanntes Seitenmossing ein seitlicher Kurzschluss, d.h. eine direkte elektronenleitende Verbindung zwischen den Elektrodenplatten auftreten kann. Unter Seitenmossing versteht man die Bildung einer Leitfähigkeitsbrücke zwischen den Elektrodenplatten durch Reduktion von in der Säure schwebenden PbO2 -oder PbSO4 - Teilchen, die sich von der negativen Platte her aufbaut.

Durch eine Randisolation der negativen Elektrodenplatte lässt sich das Seitenmossing vermeiden. Hierzu ist beispielsweise aus der DE PS 24 54 824 eine Elektrodenplatte mit einer Abdeckfolie auf jeder Seite bekannt, bei der die nur geringfügig über den Elektrodenumriß übergreifenden Kanten der Abdeckfolie durch ein flaches, steifes Band miteinander verbunden und die Elektrodenränder wie von einer glatten Leiste abgeschlossen sind. Allerdings ist der Herstellungsprozeß wegen des Anbringens der Randleiste in Form einer erst allmählich aushärtenden Klebemasse aufwändig und zeitraubend.

Als einfachere Lösung ist beispielsweise aus der DE OS 32 09 713 oder der DE-OS 44 05 863 ein Bandseparator entnehmbar, welcher abwechselnd eine positive und eine negative Platte umschließt und sich in zickzackförmiger Bahn durch den Plattensatz hindurch erstreckt. Die Nachteile dieser Konstruktion bestehen darin, dass ein automatisches und rationelles Herstellen eines Plattensatzes nicht möglich ist.

Eine andere konstruktive Maßnahme zur Vermeidung des Mossings ist es, die negative Platte einzutaschen. In der DE OS 39 22 217 wird dies durch zwei abgewinkelte Scheider erreicht, die sich beim Umschließen der Platte überlappen.

Die EP 0 753 895 zeigt eine negative Platte, die über eine Vorrichtung automatisch eingetascht wird.

Die EP 0 541 124 und die EP 0 484 295 zeigen Scheidertaschen, in welche die negative Platte eingesteckt wird.

In der DE OS 37 11 674 wird die negative Platte durch eine U-förmige Randhülle als Kantenschutz abgedeckt.

In der PCT/US 49/09499 wird ebenfalls eine eingetaschte negative Platte gezeigt. Diese Art der Plattenisolation erfordert einen zusätzlichen manuellen oder maschinellen Aufwand, um die negative Platte zu isolieren, woraus relativ hohe Fertigungskosten resultieren.

Aus der US 2934585 A, der EP 0053268 A, der US 5470676 A, der EP 0352450 A sind weitere Lösungen bekannt, bei denen die Platten in entsprechende separate Elemente eingetascht sind. Dabei ist insbesondere bei der EP0 053268 A auch vorgesehen, den randseitig über die entsprechende Elektrodenplatte vorstehenden Streifen zur Taschenbildung zu verschweißen und umzulegen und in dieser Position aneinander zu verschweißen, um eine platzsparende Anordnung zu schaffen.

Aus der EP 0167400 A ist eine Ausbildung bekannt, bei der rahmenartige Separatorblätter mit ineinandergreifenden Verschlußmitteln aneinander fixiert und lagegesichert gehalten sind.

Aus der GB 781629 A ist die Ausbildung von rahmenartigen Elementen als Separatoren bekannt. Aus der FR 687506 A ist es bekannt, Separatorplatten aus Platten zu formen, deren Seitenrandkanten durch Verschlußleisten abgedeckt sind.

Aus der GB 756644 A ist es bekannt, ein Separatorblatt aus einem Rahmen und einer Fiberglasplatte zusammenzusetzen.

Ausgehend von dem eingangs bezeichneten Stand der Technik liegt der Erfindung die Aufgabe zugrunde, einen Akkumulator gattungsgemäßer Art zu schaffen, der problemlos in einem automatischen Fertigungs- und Bestückungsvorgang hergestellt werden kann wobei zudem das Problem des Seitenmossing überwunden ist.

Die Lösung dieser Aufgabe ist im Patentanspruch 1 angegeben.

Die Erfindung zeigt einen einfachen und auch problemlos bei der automatischen Batteriefertigung zu beherrschenden Weg auf, in dem Separatoren und Platten zusammengelegt werden können und die Funktion einer Scheidertasche erfüllen.

Die Erfindung ist nachstehend anhand der Zeichnung näher erläutert. Es zeigt:
- Fig. 1: ein Separatorblatt gemäß Stand der Technik;
- Fig. 2 bis 7: Ausführungsform der Erfindung jeweils in Ansicht.

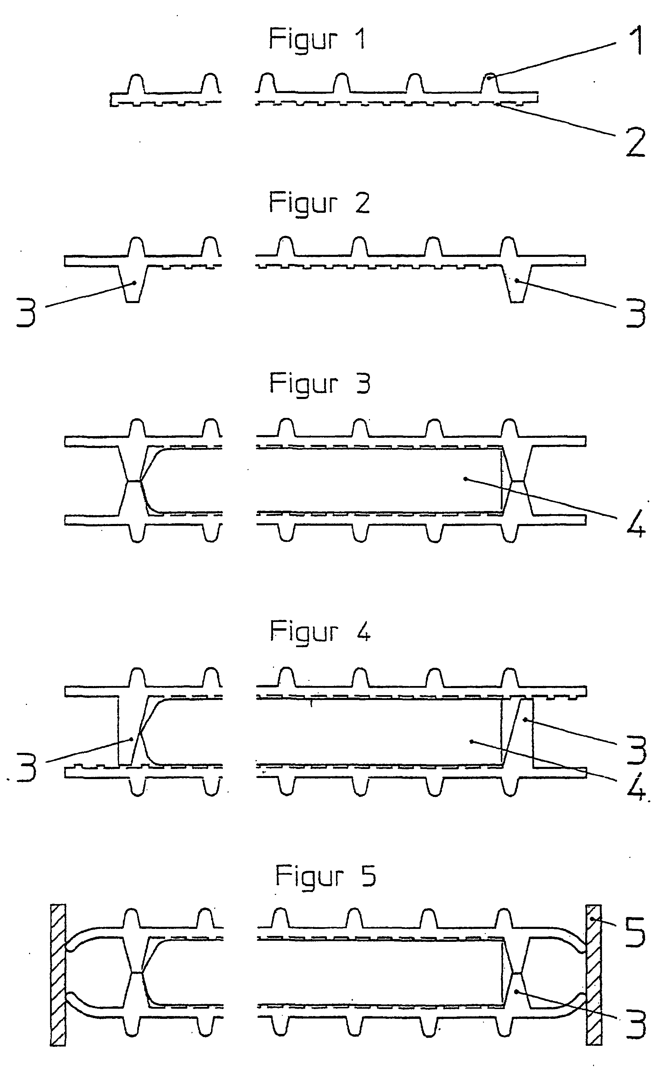

In der Figur 1 ist ein Separatorblatt gemäß Stand der Technik gezeigt, wobei auf dessen oberer Seite eine Profilierung 1 und auf dessen unterer Seite eine Profilierung 2 gezeigt ist. Beim Einbau eines solchen Separators zwischen zwei Elektrodenplatten zeigt die Profilierung 1 zur positiven Elektrode bzw. diese Elektrode liegt auf dieser Profilierung auf, während die Profilierung 2 zur negativen Elektrode zeigt bzw. an dieser aufliegt.

In Figur 2 ist ein Separatorblatt gemäß der Erfindung gezeigt. Dieses weist zusätzlich zur Profilierung 2 an seiner Unterseite zwei Ausformungen 3 auf. Der Abstand der Ausformungen 3 voneinander ist so gewählt, dass zwischen ihnen eine Elektrodenplatte 4 angeordnet werden kann. Die Höhe der Ausformung 3 ist so gewählt, dass dann, wenn zwei Separatoren aneinander gelegt werden, die Elektrodenplatte 4 umschlossen wird.

Die Figur 3 zeigt zwei zusammengelegte Separatoren nach Figur 2, die eine negative Elektrodenplatte 4 umschließen. In Figur 4 ist eine Variante der Ausformung 3 als Steg gezeigt. Dabei ist an jedem Separatorblatt ein Steg ausgebildet, wobei jeder Steg eine Höhe hat, der gleich ist wie oder gering größer ist als die Elektrodenplattendicke der Elektrodenplatte 4. Es handelt sich bei den Separatorblättern um identische Formen, die gegensinnig zueinander angeordnet und aufeinander gelegt sind, so dass die Ausformungen 3 der einen Platte sich jeweils mit ihrem Ende auf der anderen Platte abstützt.

In Figur 5 sind zwei Separatorblätter analog Figur 2 gezeigt, zwischen denen eine Elektrodenplatte 4 von den Ausformungen 3 umschlossen angeordnet ist. Diese Einheit wird in ein Akkumulatorengefäß eingebaut, wobei in der Zeichnung nur die Gefäßwand 5 beidseits gezeigt ist. Bei dieser erfindungsgemäßen Ausbildung ist die Breite der Separatoren größer als das lichte Maß des Akkumulatorengefäßes. Hierdurch ist es möglich, dass beim Einbau der Separatoren in das Akkumulatorengefäß diese mit den über die Ausformungen 3 hinausragenden Enden unter Vorspannung an der Gefäßwand 5 anliegen und vorzugsweise geringfügig gebogen oder verformt werden (nach innen oder nach außen), so dass die Separatoren zwischen den Gefäßwänden auf Vorspannung gehalten sind. Diese Vorspannung dient nicht nur als Montagehilfe, sondern durch diese Vorspannung werden die Ausformungen 3 der einander gegenüberliegenden Separatoren mit ihren Enden fest aufeinander gedrückt oder bei der Ausbildung nach Figur 4 die Ausformungsenden fest an die gegenüberliegende Fläche des Separators angedrückt.

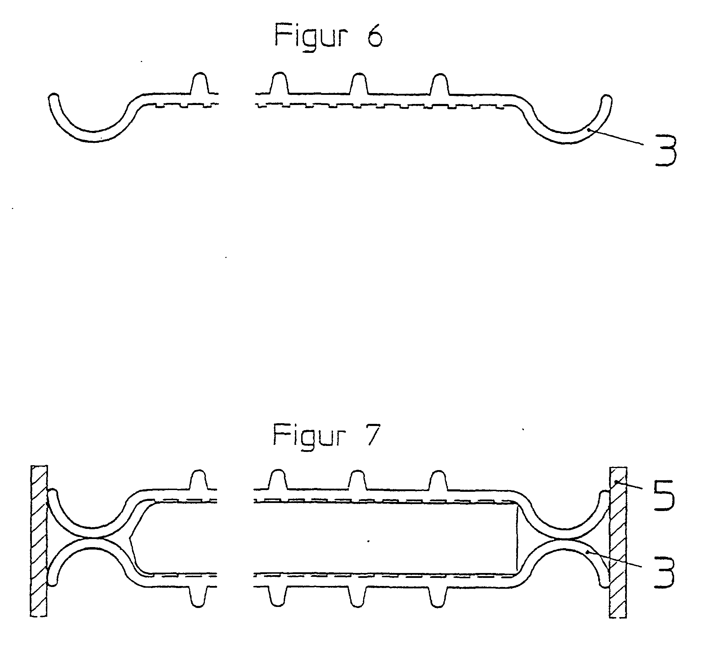

Eine weitere Variante ist in Figur 6 und 7 gezeigt.

## Patentansprüche

1. Akkumulator, insbesondere Bleiakkumulator, mit einem in einem Akkumulatorgefäß angeordneten Plattensatz, dessen positive und negative Elektrodenplatten mit einem jeweils dazwischen angeordneten Separator eine Stapelanordnung bilden, wobei der Separator aus einem Separatorblatt besteht und an der zur zu schützenden Elektrode (4) gerichteten Seite des Separators Ausformungen (3) vorgesehen sind, die zwei parallele Randkanten der Elektrode (4) mindestens teilweise abdecken, wobei der Separator seitlich über die Ausformungen (3) verlängert ist, **dadurch gekennzeichnet, dass** sich jeder Separator mit den Verlängerungen an den Gefäßwänden (5) des Akkumulators unter Vorspannung abstützt und dass die Ausformungen (3) sich mit ihren freien Enden an dem jeweils folgenden Separator abstützen unter Einschluss der dazwischen befindlichen Elektrodenplatte (4), wobei die Höhe der Ausformung (3) der Dicke der Elektrodenplatte (4) entspricht, oder dass an jedem Separator zwei gleichgerichtete Ausformungen (3) ausgebildet sind, deren Höhe der halben Dicke der Elektrodenplatte (4) entspricht, wobei die Ausformungen (3) der benachbarten Separatoren in der Sollage mit ihren Enden aneinanderliegen.

## Claims

1. An accumulator, in particular a lead accumulator, with a set of plates disposed in an accumulator box, the positive and negative electrode plates of which form a stack arrangement with a separator disposed therebetween, the separator consisting of a separator sheet and projections (3), which cover two parallel edges of the electrode (4) at least to some extent, are provided at the side of the separator directed towards the electrode (4) to be protected, the separator being laterally extended over the projections (3),
**characterised in that** each separator is supported with the extensions on the box walls (5) of the accumulator under prestress
and **in that** the projections (3) are supported by their free ends on the respective following separator with the encapsulation of the electrode plate (4) situated between them, the height of the projections (3) corresponding to the thickness of the electrode plate (4),
**or in that** constructed at each separator are two projections (3), the height of which corresponds to half the thickness of the electrode plate (4), the projections (3) of the adjacent separators being adjacent to one other with their ends in the set position.

## Revendications

1. Accumulateur, en particulier accumulateur au plomb, comportant un faisceau de plaques disposé dans un bac d'accumulateur, dont les plaques d'électrodes positives et négatives forment avec un séparateur disposé entre elles un empilage, le séparateur étant constitué d'une feuille séparatrice et des formes (3) étant prévues sur la face du séparateur dirigée vers l'électrode à protéger, lesquelles recouvrent au moins partiellement les deux arêtes latérales parallèles de l'électrode (4), le séparateur étant prolongé sur les côtés au-delà des formes (3), **caractérisé par le fait que** chaque séparateur s'appuie sous précontrainte par ses prolongements sur les parois (5) du bac de l'accumulateur et que les formes (3) s'appuient par leurs extrémités libres sur le séparateur suivant en enfermant la plaque d'électrode (4) située entre eux, la hauteur de la forme (3) correspondant à l'épaisseur de la plaque d'électrode (4), ou qu'il est formé sur chaque séparateur deux formes (3) dirigées dans le même sens dont la hauteur correspond à la moitié de l'épaisseur de la plaque d'électrode (4), les formes (3) de séparateurs voisins reposant, dans la position prévue, l'une contre l'autre par leurs extrémités.
